(19) Europäisches Patentamt
European Patent Office
Office européen des brevets

(11) **EP 2 539 788 B1**

(12) **EUROPÄISCHE PATENTSCHRIFT**

(45) Veröffentlichungstag und Bekanntmachung des Hinweises auf die Patenterteilung:
**28.05.2014 Patentblatt 2014/22**

(21) Anmeldenummer: **11707577.0**

(22) Anmeldetag: **17.02.2011**

(51) Int Cl.:
**G01F 23/02** *(2006.01)*

(86) Internationale Anmeldenummer:
**PCT/EP2011/000753**

(87) Internationale Veröffentlichungsnummer:
**WO 2011/101139 (25.08.2011 Gazette 2011/34)**

(54) **VORRICHTUNG UND VERFAHREN ZUR FÜLLSTANDSMESSUNG**

APPARATUS AND METHOD FOR FILLING LEVEL MEASUREMENT

DISPOSITIF ET METHODE DE MESURAGE DE NIVEAU DE REMPLISSAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2010 DE 102010008843**

(43) Veröffentlichungstag der Anmeldung:
**02.01.2013 Patentblatt 2013/01**

(73) Patentinhaber: **ThyssenKrupp Industrial Solutions GmbH**
**44141 Dortmund (DE)**

(72) Erfinder:
• **DZIOBEK, Frank**
**45470 Mühlheim/Ruhr (DE)**
• **JOHANNING, Joachim**
**46045 Oberhausen (DE)**

(56) Entgegenhaltungen:
**EP-A2- 0 330 123     DE-A1- 10 325 953**
**US-A- 2 069 959**

**Beschreibung**

Die Erfindung betrifft eine neue Messeinrichtung und ein Verfahren sowie dessen Verwendung zur Füllstandsregelung in Behältern mit Flüssigkeits-Gas-Gemischen. Dabei ist sowohl die Verwendung in Verdampfern denkbar.

Aus dem Stand der Technik sind Niveaumesseinrichtungen bekannt, die als seitlich an den jeweiligen Behältern angeordnete Standrohre ausgeführt und mit Schaugläsern zur Beobachtung der Flüssigkeitsniveaus in den Behältern ausgerüstet sind. Die Standrohre besitzen je einen oberen und unteren Messstutzen, die jeweils beide mit den Innenräumen der Behälter in Fluid-leitender Verbindung stehen. Dabei sind die unteren Messstutzen in Bodennähe der Behälter angebracht und die oberen Messstutzen deutlich oberhalb der Sollwerte der angestrebten Flüssigkeitsstände.

Die Messung funktioniert nach dem Prinzip der "kommunizierenden Röhren". Das Flüssigkeitsstandrohr zeigt den gleichen Niveaustand an, wie er sich im Behälter darstellt, solange die Flüssigkeit im Flüssigkeitsstandrohr sowie die Flüssigkeit, die sich im Behälter befindet, die gleiche Dichte Rho besitzen. Bei reinen Flüssigkeiten ist diese Grundvoraussetzung des gleichen Rho-Wertes für die Flüssigkeit im Behälter und diejenige im Messrohr mit guter Genauigkeit gegeben und das beschriebene Messprinzip ist ohne Probleme anwendbar.

In Flüssigkeits-Gas-Gemischen in einem Behälter ist die Dichte aber abhängig von der Menge des in der Flüssigkeit enthaltenen Gases. D.h. dass für Standmessungen an Behältern mit Zwei-Phasen-Gemischen oben genannte Forderung nicht immer erfüllt wird, weil im Standrohr das Zwei-Phasen-Gemisch separiert und die reine Flüssigkeit eine entsprechend höhere Dichte aufweist. Hierdurch ist die Messung mit Unsicherheiten verbunden.

Ein Beispiel aus dem Stand der Technik den Flüssigkeitsstand von aggressiven Flüssigkeiten über ein Flüssigkeitsstandrohr zu messen, ist in EP0330123A2 offenbart. Hier spielt allerdings der Dichteunterschied zwischen den Flüssigkeiten im Behälter und im Standrohr keine Rolle, da es sich bei dem Behälter um einen Abscheider handelt, der nicht erhitzt wird und somit ist die Ausgasung im Abscheider gleich oder zumindest ähnlich der im Flüssigkeitsstandrohr. Die EP0330123A2 geht nicht auf eine Verminderung der Fehleranzeige im Flüssigkeitsstandrohr bei verdampfenden Flüssigkeiten ein. Durch die dort offenbarte Vorrichtung wäre mit einem hohen Fehlerwert zu rechnen, da keine permante Rückflussströmungs-drosselnde Maßnahme in der unteren hydraulischen Vorrichtung 28 vorgesehen ist und eine weitere hydraulische Vorrichtung unterhalb des Sollwertes des Flüssigkeitsstand im Behälter zu jeder der in der Fig. 2 in D1 gezeigten Flüssigkeiten vorgesehen werden müsste, um den Flüssigkeitspegel beider Flüssigkeiten exakt anzuzeigen. Eine derartige Abwandlung der in D1 offenbarten Lehre wird nicht angedeutet, ist aber wie nachstehend erklärt, bei der Messung von verdampfenden Flüssigkeiten essentiell.

Es gibt durchaus Betriebszustände, bei denen das Rho der Flüssigkeit im Behälter nur halb so groß ist, wie das Rho im Flüssigkeitsstandrohr. Bei Verdampfern ist die Menge der aufsteigenden Gasblasen und damit die Verringerung der effektiven Dichte eine Funktion der Verdampferlast, es gibt also keine konstante Abweichung des spezifischen Gewichtes zwischen dem Zwei-Phasen-Gemisch und der Flüssigkeit. D. h. der jeweils wirksame Druck am unteren Messstutzen ist von der effektiven Dichte des Mediums im Verdampferraum abhängig. Diese Dichte wird aber durch den Dampfblasenanteil des verdampfenden Mediums in einem von außen nicht direkt bestimmbaren Maß herabgesetzt.

Bei Verdampfern hängt also der Umfang, in dem die effektive Dichte des Mediums im Verdampferraum herabgesetzt wird, im Wesentlichen von der verdampfenden Flüssigkeitsmenge ab, d.h. von der Verdampferbelastung. Es ist deshalb möglich, dass die Füllstandshöhe im Verdampferraum bis zum Tröpfchenabscheider ansteigt, obwohl der angezeigte Füllstand eine normale Füllhöhe suggeriert.

Ein optimales Füllstandsniveau in Verdampfern ist dann erreicht, wenn alle Wärmetauscherrohre mit Flüssigkeit bedeckt sind, und der Verdampfer seine volle Leistung entfalten kann. Ein höherer Füllstand ist nicht notwendig und auch nicht wünschenswert, denn es besteht die Gefahr, dass zusammen mit dem Gas auch Flüssigkeit den Behälter verlässt, was wiederum zu Schäden an nachgeschalteten Maschinen führen kann.

In der Regel ist es zumindest unerwünscht, wenn Flüssigkeit aus einem solchen Behälter von der Gasphase mitgerissen wird, da mit ihr Verunreinigungen wie Salze ausgetragen werden können. Dies kann zu Korrosion und Erosion in nachgeschalteten Anlagenteilen führen. Bei Anlagen mit unmittelbar nachgeschalteten Verdichtern, wie dies z.B. in den Kälteanlagen von Ammoniak-Anlagen der Fall ist, kann es hierdurch zusätzlich zu Schäden an Laufrädern kommen.

Daraus folgt, dass beim Auftreten von Zwei-Phasen-Gemischen das beschriebene Messprinzip nur bedingt anwendbar ist. Dabei ist es unerheblich, ob es sich um eine lokale optische Anzeige oder eine Fernanzeige mittels elektrischer Druckaufnehmer handelt.

Verlässt man sich trotz der beschriebenen Messungenauigkeit auf die Anzeige im Messrohr, so erfordert die Bedienung eines derartigen Regelkreises zur Regelung des Füllstandsniveaus in einem Behälter mit einem Flüssigkeits-GasGemisch viel Erfahrung und Fingerspitzengefühl. Eine optimale Einstellung des Füllstandsniveaus im Behälter für alle denkbaren Lastfälle ist nicht möglich.

D.h. also, dass je nach Konstruktion und Anwendung oder Betrieb des Behälters das optimale Betriebsniveau bekannt ist, aber das Problem der genauen messtechnischen Erfassung zu lösen bleibt.

Aufgabe der Erfindung ist es deshalb, eine Messeinrichtung an Verdampfern, ein Verfahren zum Betreiben dieser Messeinrichtung an Verdampfern sowie Verwendungen dieser Messeinrichtung zur Verfügung zu stellen, die es erlauben, bei einem gewissen Sollwert des Füllstands-niveaus im Behälter zu gewährleisten, dass der Flüssigkeitspegel im Behälter nicht so weit ansteigt, dass Flüssigkeit mit der Gasphase aus dem Behälter ausgetragen wird.

Dies wird erreicht durch den Einsatz einer neuen Messeinrichtung an einem Verdampfer zur Regelung des Füllstandsniveaus eines Flüssigkeits-Gas-Gemisches über ein Flüssigkeitszulaufventil in einem Behälter, der ein Verdampfer ist, umfassend mindestens ein vertikales Flüssigkeitsstandrohr, das an der seitlichen Außenwand des Behälters angebracht ist und das über horizontale röhrenförmige hydraulische Vorrichtungen in Fluid-leitender Verbindung mit dem Innenraum des Behälters steht, wobei

■ eine erste untere hydraulische Vorrichtung, die in Boden-Nähe des Behälters angebracht ist, so dass sich das Füllstandsniveau in dem Flüssigkeitsstandrohr mit dem in dem Behälter ändert, und
■ eine zweite hydraulische Vorrichtung, oberhalb des Sollwerts des Füllstandsniveaus in dem Behälter vorgesehen ist, so dass sich das Füllstandsniveau in dem Flüssigkeitsstandrohr mit Überschreiten eines frei wählbaren Sollwerts des Füllstandsniveaus im Behälter ändert, und
■ die Messeinrichtung mit einer Anzeige- und Regeleinrichtung ausgestattet ist, die mit dem Flüssigkeitszulaufventil des Behälters in steuernder Verbindung steht, und
■ der Behälter Zu- und Ableitungen für Flüssigkeiten und Gase umfasst, und
■ das Flüssigkeitsstandrohr mit mindestens einer weiteren dritten, horizontal in den Behälter ragenden röhrenförmigen hydraulischen Vorrichtung ausgestattet ist, die auf Höhe des Sollwerts oder unterhalb des Sollwerts des Füllstandsniveaus im Behälter angebracht ist, und
■ die erste untere hydraulische Vorrichtung in Bezug auf die weiteren vorgesehenen hydraulischen Vorrichtungen Rückflußströmungs-drosselnd ausgestaltet ist.

Dabei ist mit dem Ausdruck "auf Höhe des Sollwerts des Füllstandsniveaus im Behälter" eine Anbringung der dritten, horizontal in den Behälter ragenden röhrenförmigen hydraulischen Vorrichtung gemeint, die direkt der Höhe des Sollwertes, gemessen am Mittelpunkt der röhrenförmigen hydraulischen Vorrichtung, entspricht.

Durch die Anbringung dieser dritten hydraulischen Vorrichtung unterhalb des Sollwertes wird gewährleistet, dass zu dem Flüssigkeitsniveau im Flüssigkeitsstandrohr bei Erreichen des Sollwertes im Behälter, auch der entsprechende Wert im Flüssigkeitsstandrohr angezeigt wird. In einer bevorzugten Ausführungsform der Erfindung wird die dritte, horizontal in den Behälter ragende röhrenförmige hydraulische Vorrichtung, gemessen am Mittelpunkt des Durchmessers der hydraulischen Vorrichtung, 1 bis 25 % bezogen auf den Sollwert, bevorzugt 1 bis 15 % und besonders bevorzugt 8 bis 12 % unterhalb des Sollwertes angebracht.

In einer bevorzugten Ausführungsform ist der Behälter ein Verdampfer, wobei der Sollwert des Füllstandsniveaus in dem Verdampfer durch eine vollständige Bedeckung von im Verdampfer enthaltenen Aufheizvorrichtungen gegeben ist. Dabei umfassen die Aufheizvorrichtungen im Verdampfer mindestens ein Wärmetauscherrohr. Die Flüssigkeit kann beispielsweise eine Kühlflüssigkeit jeglicher aus dem Stand der Technik bekannten Art sein.

Vorzugsweise umfasst die Rückflußströmungs-drosselnde Ausgestaltung der ersten hydraulischen Vorrichtung eine der Maßnahmen Querschnitts-verengende Vorrichtungen und/oder Ventile und/oder Rückflussdrosseln.

Mit Vorteil werden die röhrenförmigen hydraulischen Vorrichtungen aus der Gruppe Stutzen und Schläuche ausgewählt.

Zweckmäßig ist die Anzeige- und Regeleinrichtung mit Sensoren und/oder Fühlern ausgestattet.

Das entsprechende Verfahren zur Messung des Füllstandsniveaus eines Flüssigkeits-Gas-Gemisches in einem Behälter mittels einer Messeinrichtung an einem Verdampfer nach Anspruch 1 umfasst die nachfolgenden Verfahrensschritte:

■ in den Behälter, der ein Verdampfer ist, eine Flüssigkeit geleitet wird, diese Flüssigkeit im Verdampfer über aufheizvorrichtungen erhitzt wird und als Gas aus dem Verdampfer ausgetragen wird,
■ eine Flüssigkeit wird in den Behälter geleitet, wobei die Flüssigkeit durch eine erste hydraulische Vorrichtung, die in Boden-Nähe des Behälters angebracht ist und in Bezug auf die anderen vorgesehenen hydraulischen Vorrichtungen Rückflußströmungs-drosselnd ausgestaltet ist, in das außen am Behälter angebrachte Flüssigkeitsstandrohr strömt, und
■ bei weiter ansteigendem Füllstandsniveau im Behälter und Erreichen des entsprechenden Niveaus die Flüssigkeit durch mindestens eine weitere dritte hydraulische Vorrichtung, die auf Höhe des Sollwerts oder unterhalb des Sollwerts des Füllstandsniveaus des Behälters angebracht ist, eingeleitet wird und die Flüssigkeit im Flüssigkeitsstandrohr auf den tatsächlichen Level aufgefüllt wird, und
■ bei weiterem Zuleiten von Flüssigkeit in den Behälter der Level der Flüssigkeit im Flüssigkeitsstandrohr weiter aufgefüllt wird, und
■ entweichendes Gas aus der Flüssigkeit im äußeren Flüssigkeitsstandrohr über eine zweite hydraulische Vorrichtung, die oberhalb des Sollwerts des Füllstandsniveaus im Behälter angebracht ist, geleitet wird, und
■ bei Erreichen des Sollwertes das Einleiten von Flüssigkeit in den Behälter eingestellt wird, indem von einer Anzeigeeinrichtung im Flüssigkeitsstandsrohr ein Signal an eine Regeleinrichtung gesendet wird, und durch diese das Flüssigkeitszulaufventil des Behälters geschlossen wird, und
■ bei Unterschreiten des Sollwertes von der Anzeige- und Regeleinrichtung ein Signal gesendet wird, wodurch das Flüssigkeitszulaufventil des Behälters geöffnet wird.

Eine bevorzugte Verwendung ist die Messeinrichtung zur Regelung des Füllstandsniveaus in Kaltverdampfern mit Zwei-Phasen-Gemischen einzusetzen. Diese Verwendung ist vor allem bei Ammoniak-Anlagen von Vorteil. Ein Einsatz in Heißverdampfern ist ebenfalls möglich.

Anhand der nachfolgenden Figuren sollen verschiedene Ausführungsvarianten der Erfindung näher erläutert werden:

Fig 1:  Eine schematische Darstellung einer Messvorrichtung nach dem Stand der Technik zur Regelung des Füllstandsniveaus eines Flüssigkeits-Gas-Gemisches wird anhand eines Querschnitts durch einen Behälter gezeigt.

Fig 2:  Eine schematische Darstellung der erfindungsgemäßen Messvorrichtung zur Regelung des Füllstandsniveaus eines Flüssigkeits-Gas-Gemisches wird anhand eines Querschnitts durch einen Behälter gezeigt.

Fig. 3:  Darstellung der zu erwartenden Messfehler des Flüssigkeitsniveaus bei der erfindungsgemäßen Vorrichtung.

Fig. 4:  Eine schematische Darstellung der erfindungsgemäßen Messvorrichtung des Füllstandsniveaus eines Flüssigkeits-Gas-Gemisches wird anhand eines Querschnitts durch einen Rohrbündel-Kaltverdampfer gezeigt.

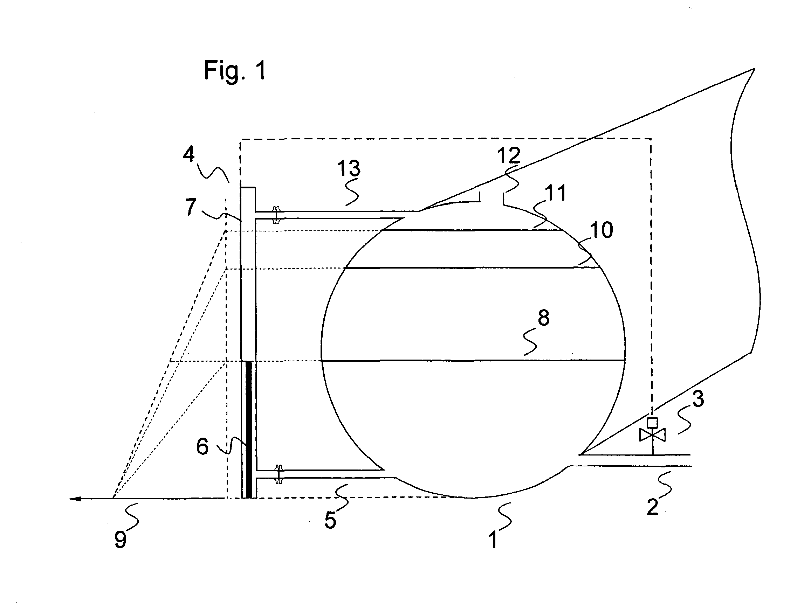

In Fig. 1 ist ein Behälter 1 dargestellt, der über eine Zulaufleitung 2, die mit einem steuerbaren Flüssigkeitszulaufventil 3 ausgestattet ist, das mit der Messeinrichtung nach dem Stand der Technik 4 in steuernder Verbindung steht. Gelangt Flüssigkeit in den Behälter 1, so strömt diese in den ersten unteren Messstutzen 5 der Messvorrichtung nach dem Stand der Technik 4, der in der Nähe des Behälterbodens angebracht ist. Mit steigendem Füllstandsniveau im Behälter 1 steigt auch die Flüssigkeitssäule 6 im Flüssigkeitsstandrohr 7 der Messvorrichtung nach dem Stand der Technik 4. Die Flüssigkeitssäule 6 im Flüssigkeitsstandrohr 7 steigt bis zum Stillstandswert 8 der Flüssigkeit.

Enthält die Flüssigkeit Gasblasen, so ist der angezeigte Flüssigkeitslevel 6 im Flüssigkeitsstandrohr 7 im Weiteren mit einem Fehler behaftet, der dadurch zustande kommt, dass der wirksame statische Druck 9 am ersten unteren Messstutzen 5 von der effektiven Dichte des Mediums im Behälterinneren abhängig ist. Diese Dichte wird durch den Gasblasenanteil der Flüssigkeit im Behälter herabgesetzt. In einer Messeinrichtung nach dem Stand der Technik trennen sich Gas und Flüssigkeit im äußeren Flüssigkeitsstandrohr 7, das Gas wird über den zweiten oberen Messstutzen 13 abgeleitet, der oberhalb des Sollwerts 10 im Behälter 1 vorgesehen ist, und die Flüssigkeitssäule 6 besteht nur aus Flüssigkeit mit entsprechend höherer Dichte. Da im unteren Messstutzen 5 ein Druckgleichgewicht herrscht, ist die Höhe der Flüssigkeitssäule 6 prinzipiell niedriger als im Behälter.

Es ist deshalb möglich, dass der Istwert 11 der Flüssigkeitshöhe im Behälterinneren bereits viel höher ist als die Flüssigkeitssäule 6 im Flüssigkeitsstandrohr suggeriert. Bezeichnet man mit $y_d$ den mittleren Dampfgehalt der Flüssigkeit im Behälter, so lässt sich aus dem Gleichgewicht der hydrostatischen Drücke im unteren Messstutzen 5 die Beziehung

$$F_h \ = \ (h_b - h_m) \ / \ h_b \ = \ 1 - h_b \ / \ h_m \ = \ y_d$$

für den relativen Fehler der herkömmlichen Messeinrichtung herleiten. Der Fehler ist im Wesentlichen vom volumetrischen Gasgehalt der Flüssigkeit abhängig und weitgehend konstant über dem gesamten Messbereich. In der Formel bedeuten $h_b$ das Istniveau (8) des Flüssigkeitsstandes im Behälter und $h_m$ der Messwert (6) gemäß Fig. 1.

Aus diesem Grund ist es sehr schwierig, einen gewünschten Sollwert 10 eines Zwei-Phasen-Gemisches im Behälterinneren mittels der Messeinrichtung 4 zu halten und einen Austrag an Flüssigkeit aus dem Behälter 1 über einen Gasaustrittsstutzen 12 zu verhindern.

Das späte Erkennen des tatsächlichen Flüssigkeitslevels im Behälter 1 ist sehr unvorteilhaft, da es eventuell zu einer Austragung von Flüssigkeit über die Gasphase kommt, die über den Gasaustrittsstutzen 12 aus dem Behälter 1 abgeführt wird.

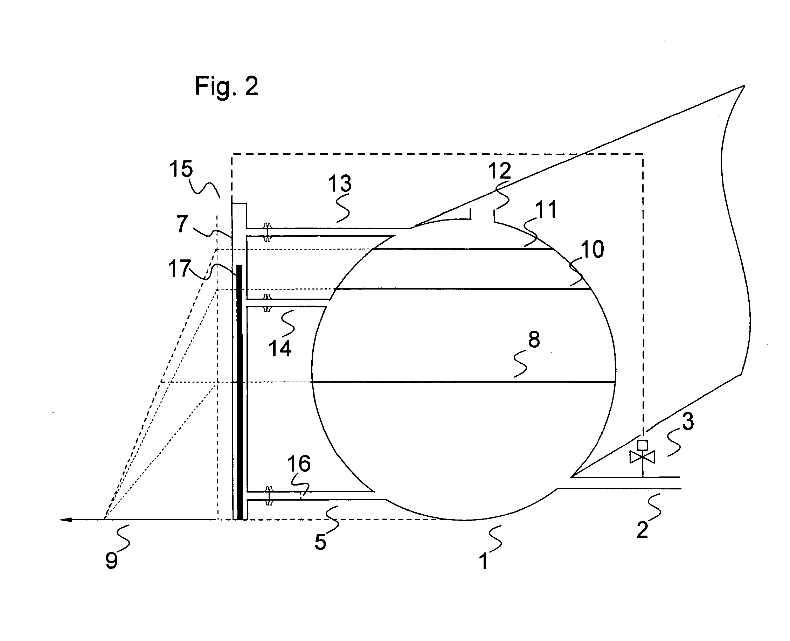

In Fig. 2, die den Behälter 1 mit der erfindungsgemäßen Messvorrichtung 15 zeigt, wird bei zuströmender Flüssigkeit ebenfalls Flüssigkeit über den ersten unteren Messstutzen 5 der Messeinrichtung 15 in das Flüssigkeitsstandrohr 7 strömen. Die Flüssigkeitssäule im Flüssigkeitsstandrohr wird dabei bis zum Stillstandswert 8 der Flüssigkeit ansteigen. Dies entspricht demselben Wert der Flüssigkeitssäule 6 aus Fig. 1.

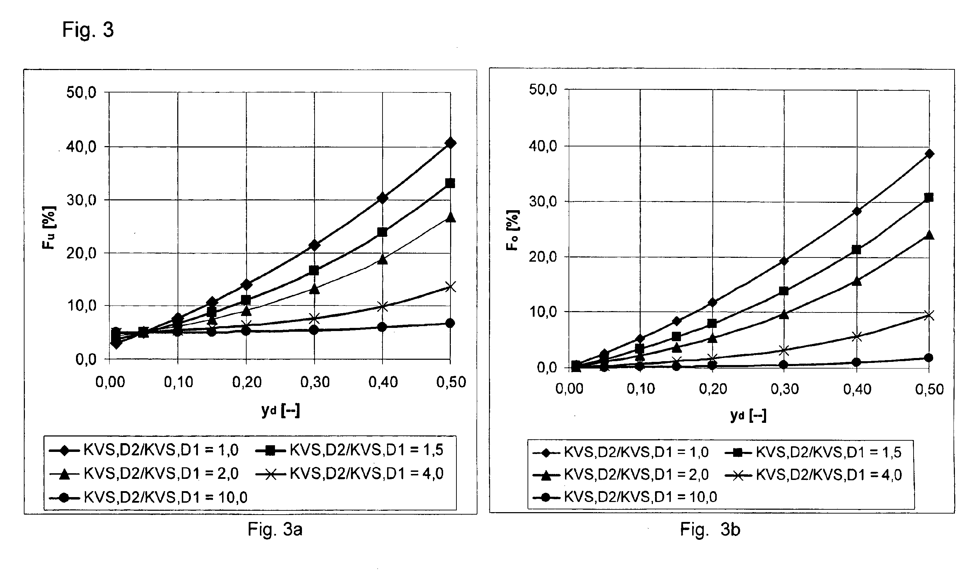

Enthält die Flüssigkeit Gasblasen, so ist der angezeigte Flüssigkeitslevel im Flüssigkeitsstandrohr 7 auch bei der erfindungsgemäßen Messvorrichtung 15 mit dem gleichen Fehler behaftet, wie in der Beschreibung der Fig. 1 dargestellt. Bei weiter ansteigendem Flüssigkeitslevel im Behälter 1 wird die Flüssigkeit durch einen weiteren Messstutzen 14, der unterhalb des Sollwerts 10 des Füllstandsniveaus des Behälters 1 angebracht ist, geleitet. Die Flüssigkeitssäule 6 aus Fig. 1 im Flüssigkeitsstandrohr 7 wird dadurch auf den tatsächlichen Level aufgefüllt. Nun entsteht eine treibende Kraft im Flüssigkeitsstandrohr 7, da der statische Druck 9 am Fuß des Flüssigkeitsstandrohres 7 höher ist als der statische Druck am Behälterboden. Dies ist dadurch bedingt, dass bei gleicher Höhe des Füllstandsniveaus im Behälter 1 ein Zwei-Phasen-Gemisch wirkt, während im Flüssigkeitsstandrohr 7 reine Flüssigkeit vorhanden ist. Dadurch wird eine Schlaufenströmung im Flüssigkeitsstandrohr 7 eingeleitet und die Flüssigkeit im Flüssigkeitsstandrohr 7 fließt durch den ersten unteren Messstutzen 5 wieder in den Behälter 1 zurück. Dieser Rückfluss wird bei der erfindungsgemäßen Messeinrichtung 15 nun über eine Rückflußströmungsdrossel 16 gebremst, so dass die Flüssigkeit nicht schneller aus dem Flüssigkeitsstandrohr entweichen kann, wie Flüssigkeit über den weiteren Messstutzen 14 nachläuft. Deshalb ist bei diesem Betriebspunkt die Messung sehr exakt und entspricht fast dem Sollwert 10. Auf diesen Messfehler wird in nachstehend beschriebener Fig. 3 entsprechend eingegangen.

Da der Sollwert bei diesem Betriebspunkt aber noch nicht vollständig erreicht ist, bleibt das Zulaufventil 3 weiter geöffnet, und die Flüssigkeitssäule 17 im Flüssigkeitsstandrohr 7 steigt weiter an. Entweichendes Gas aus der Flüssigkeit im Flüssigkeitstandrohr 7 verlässt das Flüssigkeitsstandrohr 7 über den zweiten oberen Messstutzen 13, der oberhalb des Sollwerts 10 im Behälter 1 vorgesehen ist. Bei Erreichen des Sollwertes wird das Einleiten von Flüssigkeit in den Behälter 1 eingestellt, indem über Sensoren ein Signal an das steuerbare Flüssigkeitszulaufventil 3 gesendet wird und das Flüssigkeitszulaufventil 3 geschlossen wird.

Bei weiterem Ansteigen der Flüssigkeit im Behälter 1 strömt diese durch den oberen Messstutzen 13 in das Flüssigkeitsstandrohr 7, wodurch die Flüssigkeitssäule 17 im Flüssigkeitsstandrohr 7 weiter aufgefüllt wird und ein Überschreitungswert angezeigt wird. Bei Erreichen dieses Überschreitungswertes wird erneut über Sensoren ein Signal an das steuerbare Flüssigkeitszulaufventil 3 gesendet, wodurch sich dann das Flüssigkeitszulaufventil 3 schließt und somit keine weitere Flüssigkeit in den Behälter 1 gelangt.

Erst bei Unterschreiten des Sollwertes 10 wird dem Flüssigkeitszulaufventil 3 erneut ein Signal übermittelt, das bewirkt, dass sich das Flüssigkeitszulaufventil 3 wieder öffnet und erneut Flüssigkeit in den Behälter 1 einströmt.

Im Folgenden wird anhand der <u>Fig. 3</u> der zu erwartende Messfehler der erfindungsgemäßen Vorrichtung detailliert beschrieben. Bezeichnet man - wie in Fig. 2 dargestellt - den volumetrischen Dampfgehalt der Flüssigkeit im Behälter mit $y_d$, das Flüssigkeitsniveau im Behälter mit $h_b$, den Flüssigkeitsstand in der neuen Messeinrichtung mit $h_m$, die Höhe des dritten Zulaufstutzens 14 mit H sowie die Durchflussbeiwerte des unteren Messstutzens mit $K_{VS,D1}$ und den des dritten Zulaufstutzens 14 mit $K_{VS,D2}$, so ergibt sich das Verhältnis zwischen dem tatsächlichen Flüssigkeitsniveau im Behälter $h_b$ und dem angezeigten Messwert $h_m$ für den Fall

$$h_m \; < \; H$$

zu

$$h_b \;\;\; = \;\;\; h_m * [1 + H / h_m * (1 - y_d)^{2*} (K_{VS,D2}/K_{VS,D1})^{2}] \, / \, [(1 - y_d) + (1 - y_d)^{2*} (K_{VS,D2}/K_{VS,D1})^{2}]$$

und der relative Fehler zwischen Istwert und Messwert zu

$$F_u \;\;\; = \;\;\; (h_b - h_m) / h_b = 1 - h_m / h_b$$

$$F_u = 1 - [(1 - y_d) + (1 - y_d)^{2}*(K_{VS,D2}/K_{VS,D1})^{2}] / [1 + H / h_m*(1 - y_d)^{2}* (K_{VS,D2}/K_{VS,D1})^{2}]$$

sowie für den Fall

$$h_m \geq H$$

das Verhältnis zwischen dem tatsächlichen Flüssigkeitsniveau im Behälter $h_b$ und dem angezeigten Messwert $h_m$ zu

$$h_b = h_m*[y_d*H / h_m + (1 - y_d) + (1 - y_d)^{2}*(K_{VS,D2}/K_{VS,D1})^{2}] / [(1 - y_d) + (1 - y_d)^{2}*(K_{VS,D2}/K_{VS,D1})^{2}]$$

und der relative Fehler zwischen Istwert und Messwert zu

$$F_o = [(1 - y_d) + (1 - y_d)^{2}*(K_{VS,D2}/K_{VS,D1})^{2}] / [y_d*H / h_m + (1 - y_d) + (1 - y_d)^{2}*(K_{VS,D2}/K_{VS,D1})^{2}]$$

Fig. 3 zeigt, wie der verbleibende Fehler bei der neuen Messeinrichtung von der Wahl der Durchflusseigenschaften des unteren Messstutzens 5 ($K_{VS,D1}$) sowie des zusätzlichen dritten Messstutzens 14 ($K_{VS,D2}$) abhängt und verdeutlicht die recht geringe Größe der verbleibenden Fehler auch für große Werte des Dampfgehaltes $y_d$ in der Flüssigkeit bei geeigneter Wahl des Verhältnisses $K_{VS,D2}/K_{VS,D1}$. Hierbei zeigt <u>Fig. 3a</u> die Fehler im Bereich $h_m < H$ und <u>Fig. 3b</u> die Fehler für den Bereich $h_m \geq H$.

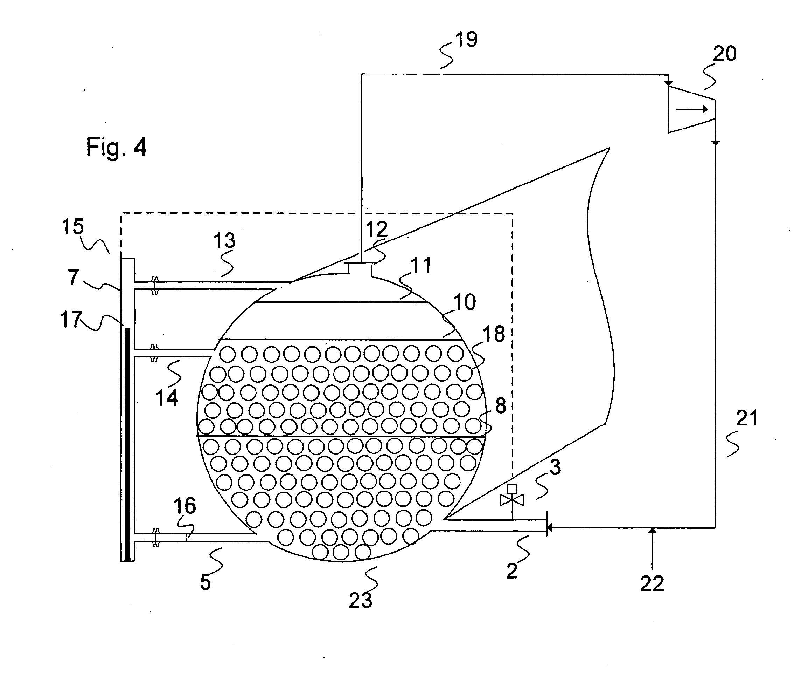

In <u>Fig. 4</u> ist die Anwendung der erfindungsgemäßen Messeinrichtung anhand eines Kaltverdampfers 23 gezeigt, wie er beispielsweise in Ammoniakanlagen zum Einsatz kommt. Das Anfahren kann, wenn dies verfahrenstechnisch möglich ist, auch bei einem leeren Kaltverdampfer 23 erfolgen. Sobald flüssiges Kältemittel 21, 22 in den ersten unteren Messstutzen 5 gelangt, nimmt die Messeinrichtung, wie unter Fig. 2 beschrieben, ihre Arbeit auf. Der Sollwert 10 ist bei dieser Anwendung durch eine vollständige Bedeckung der Wärmetauscherrohre 18 mit Kältemittel 21, 22 gegeben. Durch die im Kaltverdampfer enthaltenen Wärmetauscherrohre 18 wird das flüssige Kältemittel 21, 22, das sich im Kaltverdampfer 23 befindet, verdampft und bildet in der Flüssigkeit aufsteigende Gasblasen, wodurch ein Zwei-Phasen-Gemisch entsteht. Diese Gasblasen verlassen den Kaltverdampfer 23 über den Gasauslaßstutzen 12. Das gasförmige Kältemittel wird über Leitung 19 in einen Verdichter 20 geführt, mit dessen Hilfe das gasförmige Kältemittel wieder verflüssigt wird und dem Kaltverdampfer 23 wieder zugeführt wird, wodurch sich der Kältemittelkreislauf schließt. Über die Leitung 22 kann extern Kältemittel nachgefüllt werden. Als Kältemittel wird bei dieser Anwendung vorzugsweise Ammoniak verwendet.

Bei einem Wechsel von Vollast- auf Schwachlastbetrieb des Kaltverdampfers 23 sind die Bedingungen so, dass sich bei Schwachlast des Kaltverdampfers 23 weniger Gasblasen in der Flüssigkeit befinden, da weniger Flüssigkeit verdampft. Dadurch verringert sich das Volumen des Zwei-PhasenGemisches um diesen Betrag. Dies hat zur Folge, dass der Füllstand im Kaltverdampfer 23 stark abnimmt. Nun beginnt der in Fig. 2 beschriebene Regelvorgang und der Sollwert 10 des Füllstandes wird wieder auf den optimalen Stand gefahren.

Bei einem umgekehrten Lastwechsel von Schwachlastbetrieb auf Vollastbetrieb des Kaltverdampfers 23 besteht die Gefahr, dass es, bei einem spontanen Wechsel zu einem Überlaufen des Kaltverdampfers 23 kommt. Der Grund beruht darauf, dass sich das Füllstandsniveau im Kaltverdampfer 23 am optimalen Punkt für einen Schwachlastbetrieb befindet, bei dem aufgrund der geringen Menge an entstehenden Gasblasen, flüssiges Kältemittel, wie oben beschrieben, nachgeregelt wird. Wird nun der Gasblasenanteil durch einen plötzlichen Vollastbetrieb des Kaltverdampfers 23 spontan erhöht, so erhöht sich auch das Volumen des Füllstandsniveaus im Kaltverdampfer 23. Daraus folgt, dass der Gradient des Lastwechsels das Freiraumvolumen des Kaltverdampfers 23 nicht übersteigen darf. Ist diese Forderung erfüllt, so wird das zu hohe Füllstandsniveau durch Verdampfung abgebaut, während das steuerbare Zulaufventil 3 geschlossen bleibt, bis das optimale Füllstandsniveau, also der Sollwert 10, wieder erreicht ist und die Messeinrichtung ihren Regelbetrieb wie unter Fig. 2 beschrieben wieder aufnimmt.

Vorteile, die sich aus der Erfindung ergeben:

- ohne großen Aufwand realisierbar

- ein optimaler Füllstand des Behälters wird jederzeit realisiert.

- In Verdampfern ist der optimale Füllstand auch bei Lastwechseln gewährleistet.

- der Fehler der optischen Anzeige im Flüssigkeitsmessglas ist ab Erreichen des Füllstands im Behälter der zusätzlichen dritten hydraulischen Vorrichtung der Messeinrichtung nur mit einem sehr geringen Fehler belastet.

**Bezugszeichenliste**

| 1 | Behälter |
|---|---|
| 2 | Zulaufleitung |
| 3 | steuerbares Flüssigkeitszulaufventil |
| 4 | Messeinrichtung nach dem Stand der Technik |
| 5 | erster unterer Messstutzen |
| 6 | Flüssigkeitssäule |
| 7 | Flüssigkeitsstandrohr |
| 8 | Stillstandswert |
| 9 | statischer Druck |
| 10 | Sollwert |
| 11 | Istwert |
| 12 | Gasaustrittsstutzen |
| 13 | zweiter oberer Messstutzen |
| 14 | weiterer Messstutzen |
| 15 | erfindungsgemäße Messeinrichtung |
| 16 | Rückflußströmungsdrossel |
| 17 | Flüssigkeitssäule |
| 18 | Wärmetauscherrohre |
| 19 | Leitung |
| 20 | Verdichter |
| 21 | flüssiges Kältemittel |

22    flüssiges Kältemittel

23    Kaltverdampfer

**Patentansprüche**

1.  Messeinrichtung an einem Verdampfer zur Regelung des Füllstandsniveaus eines Flüssigkeits-Gas-Gemisches über ein Flüssigkeitszulaufventil in einem Behälter (1), der ein Verdampfer ist, umfassend mindestens ein vertikales Flüssigkeitsstandrohr (7), das an der seitlichen Außenwand des Behälters (1) angebracht ist und das über horizontale röhrenförmige hydraulische Vorrichtungen (13, 14, 5) in Fluid-leitender Verbindung mit dem Innenraum des Behälters (1) steht, wobei

    ■ eine erste untere hydraulische Vorrichtung (5), die in Boden-Nähe des Behälters (1) angebracht ist, so dass sich das Füllstandsniveau in dem Flüssigkeitsstandrohr (7) mit dem in dem Behälter (1) ändert, und
    ■ eine zweite hydraulische Vorrichtung (13), oberhalb des Sollwerts des Füllstandsniveaus in dem Behälter vorgesehen ist, so dass sich das Füllstandsniveau in dem Flüssigkeitsstandrohr (7) mit Überschreiten eines frei wählbaren Sollwerts des Füllstandsniveaus im Behälter (1) ändert, und
    ■ die Messeinrichtung mit einer Anzeige- und Regeleinrichtung ausgestattet ist, die mit dem Flüssigkeitszulaufventil (3) des Behälters (1) in steuernder Verbindung steht, und
    ■ der Behälter (1) Zu- und Ableitungen für Flüssigkeiten und Gase umfasst,
    **dadurch gekennzeichnet, dass**
    ■ das Flüssigkeitsstandrohr (7) mit mindestens einer weiteren dritten, horizontal in den Behälter (1) ragenden röhrenförmigen hydraulischen Vorrichtung (14) ausgestattet ist, die auf Höhe des Sollwerts oder unterhalb des Sollwerts des Füllstandsniveaus im Behälter angebracht ist, und
    ■ die erste untere hydraulische Vorrichtung (5) in Bezug auf die weiteren vorgesehenen hydraulischen Vorrichtungen Rückflußströmungs-drosselnd (5) ausgestaltet ist.

2.  Messeinrichtung an einem Verdampfer zur Regelung des Füllstandsniveaus nach Anspruch 1, **dadurch gekennzeichnet, dass** der Behälter (1) ein Verdampfer ist, wobei der Sollwert des Füllstandsniveaus in dem Verdampfer durch eine vollständige Bedeckung von im Verdampfer enthaltenen Aufheizvorrichtungen (18) gegeben ist.

3.  Messeinrichtung an einem Verdampfer zur Regelung des Füllstandsniveaus nach Anspruch 2, **dadurch gekennzeichnet, dass** die Aufheizvorrichtungen im Verdampfer mindestens ein Wärmetauscherrohr (18) umfassen.

4.  Messeinrichtung an einem Verdampfer zur Regelung des Füllstandsniveaus nach einem der vorstehenden Ansprüche, **dadurch gekennzeichnet, dass** die dritte, horizontal in den Behälter (1) ragende röhrenförmige hydraulische Vorrichtung (14), gemessen am Mittelpunkt des Durchmessers der hydraulischen Vorrichtung (14), 1 bis 25 % bezogen auf den Sollwert, bevorzugt 1 bis 15 % und besonders bevorzugt 8 bis 12 % unterhalb des Sollwertes angebracht ist.

5.  Messeinrichtung an einem Verdampfer zur Regelung des Füllstandsniveaus nach einem der vorstehenden Ansprüche, **dadurch gekennzeichnet, dass** die Rückflußströmungs-drosselnde Ausgestaltung (5) der ersten hydraulischen Vorrichtung (5) eine der Maßnahmen Querschnitts-verengende Vorrichtungen und/oder Ventile und/oder Rückflussdrosseln umfasst.

6.  Messeinrichtung an einem Verdampfer zur Regelung des Füllstandsniveaus nach einem der vorstehenden Ansprüche, **dadurch gekennzeichnet, dass** die röhrenförmigen hydraulischen Vorrichtungen (13, 14, 5) aus der Gruppe Stutzen und Schläuche ausgewählt werden.

7.  Messeinrichtung an einem Verdampfer zur Regelung des Füllstandsniveaus nach einem der vorstehenden Ansprüche, **dadurch gekennzeichnet, dass** die Anzeige- und Regeleinrichtung mit Sensoren und/oder Fühlern ausgestattet ist.

8.  Verfahren zur Regelung des Füllstandsniveaus eines Flüssigkeits-Gas-Gemisches in einem Behälter (1) mittels einer Messeinrichtung an einem Verdampfer nach Anspruch 1, wobei

    ■ in den Behälter (1), der ein Verdampfer ist, eine Flüssigkeit geleitet wird, diese Flüssigkeit im Verdampfer über Aufheizvorrichtungen (18) erhitzt wird und als Gas aus dem Verdampfer ausgetragen wird,

■ eine Flüssigkeit in den Behälter (1) geleitet wird, wobei die Flüssigkeit durch eine erste hydraulische Vorrichtung (5), die in Boden-Nähe des Behälters (1) angebracht ist und in Bezug auf die anderen vorgesehenen hydraulischen Vorrichtungen (13, 14) Rückflußströmungs-drosselnd (5) ausgestaltet ist, in das Flüssigkeitsstandrohr (7) strömt, und

■ bei weiter ansteigendem Füllstandsniveau im Behälter (1) die Flüssigkeit durch mindestens eine weitere dritte hydraulische Vorrichtung (14), die auf Höhe des Sollwerts oder unterhalb des Sollwerts des Füllstandsniveaus des Behälters (1) angebracht ist, eingeleitet wird und die Flüssigkeit im Flüssigkeitsstandrohr (7) auf den tatsächlichen Level aufgefüllt wird, und

■ bei weiterem Zuleiten von Flüssigkeit in den Behälter (1) der Level der Flüssigkeit im Flüssigkeitsstandrohr (7) weiteraufgefüllt wird, und

■ entweichendes Gas aus der Flüssigkeit im Flüssigkeitsstandrohr (7) über eine zweite hydraulische Vorrichtung (13), die oberhalb des Sollwerts des Füllstandsniveaus im Behälter (1) angebracht ist, geleitet wird, und

■ bei Erreichen des Sollwertes das Einleiten von Flüssigkeit in den Behälter (1) eingestellt wird, indem von einer Anzeige- und Regeleinrichtung ein Signal gesendet wird, wodurch das Flüssigkeitszulaufventil (3) des Behälters (1) geschlossen wird, und

■ bei Unterschreiten des Sollwertes von der Anzeige- und Regeleinrichtung ein Signal gesendet wird, wodurch das Flüssigkeitszulaufventil (3) des Behälters (1) geöffnet wird.

9. Verwendung der Messeinrichtung an einem Verdampfer nach Anspruch 1 **dadurch gekennzeichnet, dass** die Messeinrichtung zur Regelung des Füllstandsniveaus in Kaltverdampfern (23) mit Zwei-Phasen-Gemischen eingesetzt wird.

10. Verwendung der Messeinrichtung an einem Verdampfer nach Anspruch 1 **dadurch gekennzeichnet, dass** die Messeinrichtung zur Regelung des Füllstandsniveaus in Kaltverdampfern von Ammoniak-Anlagen eingesetzt wird.

**Claims**

1. Measuring device arranged on an evaporator for controlling the fill level of a liquid-gas mixture using a liquid feed valve in a vessel (1) which is an evaporator, comprising at least one vertical fluid standpipe (7) which is installed on the side external wall of the vessel (1) and which is connected in a fluid-bearing manner with the internal chamber of the vessel (1) via horizontal, tube-like, hydraulic devices (13,14,5), wherein

■ a first lower level hydraulic device (5) is installed close to the bottom of the vessel (1) so that the fill level in the fluid standpipe (7) changes with that in the vessel (1), and
■ a second hydraulic device (13) is provided above the set point of the fill level in the vessel so that the fill level in the fluid standpipe (7) changes when a freely selected set point of the fill level in the vessel (1) is exceeded, and
■ the measuring device is equipped with a display and control device which has a controlling connection with the liquid feed valve (3) of the vessel (1), and
■ the vessel (1) includes inlet and outlet lines for liquids and gases,
**characterised in that**
■ the fluid standpipe (7) is equipped with at least a further third tube-like hydraulic device (14) which protrudes into the vessel (1) horizontally, which is installed at the height of the set point or below the set point of the fill level in the vessel, and
■ the first lower level hydraulic device (5), in relation to the other hydraulic devices provided, is designed to throttle the reflux flow (5).

2. Measuring device arranged on an evaporator for controlling the fill level according to claim 1, **characterised in that** the vessel (1) is an evaporator, wherein the set point of the fill level in the evaporator is achieved by complete coverage of the heating units (18) contained in the evaporator.

3. Measuring device arranged on an evaporator for controlling the fill level according to claim 2, **characterised in that** the heating units in the evaporator comprise at least one heat exchanger tube (18).

4. Measuring device arranged on an evaporator for controlling the fill level according to one of the above claims, **characterised in that** the third tube-like hydraulic device (14), which protrudes into the vessel (1) horizontally, measured at the centre point of the diameter of the hydraulic device (14), is installed at 1 to 25% in relation to the set point, with preference being given to 1 to 15%, and particular preference being given to 8 to 12% below the set point.

5. Measuring device arranged on an evaporator for controlling the fill level according to one of the above claims, **characterised in that** the reflux-flow-throttling embodiment (5) of the first hydraulic device (5) comprises one of the methods: profile-constricting devices and/or valves and/or reflux throttles.

6. Measuring device arranged on an evaporator for controlling the fill level according to one of the above claims, **characterised in that** the tube-like hydraulic devices (13,14,5) are selected from the nozzles and hoses group.

7. Measuring device arranged on an evaporator for controlling the fill level according to one of the above claims, **characterised in that** the display and control device is fitted with sensors and/or probes.

8. Process for controlling the fill level of a liquid-gas mixture in a vessel (1) by means of a measuring device arranged on an evaporator according to claim 1, wherein

■ a liquid is fed into the vessel (1) which is an evaporator, and this liquid is heated in the evaporator via heating units (18) and is discharged from the evaporator as gas,
■ a liquid is fed into the vessel (1), wherein the liquid streams into the fluid standpipe (7) through a first hydraulic device (5) which is installed close to the bottom of the vessel (1) and, in relation to the other hydraulic devices (13,14) provided, is designed to throttle the reflux flow (5), and
■ upon the fill level rising further in the vessel (1) the liquid is fed through at least one additional third hydraulic device (14) which is installed at the height of the set point or below the set point of the fill level of the vessel (1), and the liquid in the fluid standpipe (7) is filled up to the actual level, and
■ upon additional liquid being fed into the vessel (1) the level of the liquid in the fluid standpipe (7) is filled up further, and
■ any gas escaping from the liquid in the fluid standpipe (7) is fed via a second hydraulic device (13) which is installed above the set point of the fill level in the vessel (1), and
■ upon reaching the set point the liquid feed into the vessel (1) is stopped by means of a display and control device sending a signal which causes the liquid feed valve (3) of the vessel (1) to close, and
■ in the event of the set point not being reached a signal is sent by the display and control device, whereby the liquid feed valve (3) of the vessel (1) is opened.

9. Use of the measuring device arranged on an evaporator according to claim 1, **characterised in that** the measuring device for controlling the fill level is used in cold evaporators (23) with two-phase mixtures.

10. Use of the measuring device arranged on an evaporator according to claim 1, **characterised in that** the measuring device for controlling the fill level is used in cold evaporators of ammonia plants.

**Revendications**

1. Dispositif de mesure implanté sur un évaporateur pour réguler le niveau de remplissage d'un mélange gaz/liquide via une vanne d'arrivée du liquide dans un bac (1), faisant office d'évaporateur, comprenant au moins un tube vertical indicateur de niveau (7), implanté sur la paroi latérale extérieure du bac (1) et relié pour conduire le fluide dans l'espace intérieur du bac (1) via des dispositifs tubulaires horizontaux et hydrauliques (13, 14, 5), sachant que

■ un premier dispositif hydraulique inférieur (5), implanté à proximité du fond du bac (1) de telle sorte que le niveau de remplissage dans le tube de niveau (7) change avec celui dans le bac (1) et que
■ un second dispositif hydraulique (13), prévu au-dessus de la consigne du niveau de remplissage dans le bac, de telle sorte que le niveau de remplissage dans le tube (7) change sur dépassement d'une consigne de niveau dans le bac (1) à définir et que
■ le dispositif de mesure est équipé d'un dispositif d'affichage et de régulation, pilotant la vanne d'arrivée du liquide (3) du bac (1) et que
■ le bac (1) comprend des tuyauteries d'arrivée et de sortie pour liquides et gaz,
**caractérisé en ce que**
■ le tube de niveau de liquide (7) est équipé d'au moins un troisième autre dispositif tubulaire hydraulique horizontal en saillie dans le bac (1), implanté au niveau de la consigne ou au-dessous de la consigne du niveau de remplissage dans le bac et que

■ le premier dispositif hydraulique inférieur (5) est conçu pour obturer le courant de retour (5) par rapport aux autres dispositifs hydrauliques prévus.

2. Dispositif de mesure implanté sur un évaporateur pour réguler le niveau de remplissage conformément à la revendication 1, **caractérisé en ce que,** le bac (1) est un évaporateur, sachant que la consigne du niveau de remplissage de l'évaporateur est donnée par un recouvrement total des dispositifs de chauffage compris dans l'évaporateur (18).

3. Dispositif de mesure implanté sur un évaporateur pour réguler le niveau de remplissage conformément à la revendication 2, **caractérisé en ce que** les dispositifs de chauffage dans l'évaporateur comprennent au moins un tube échangeur (18).

4. Dispositif de mesure implanté sur un évaporateur pour réguler le niveau de remplissage conformément à une des revendications ci-dessus, **caractérisé en ce que** le troisième dispositif tubulaire hydraulique horizontal en saillie dans le bac (1) est implanté par rapport au centre du diamètre du dispositif hydraulique (14), 1 à 25 % de la consigne, de préférence 1 à 15 % ou encore mieux 8 à 12 % en-dessous de la consigne.

5. Dispositif de mesure implanté sur un évaporateur pour réguler le niveau de remplissage conformément à une des revendications ci-dessus, **caractérisé en ce que** la conception de l'obturation du courant de retour (5) du premier dispositif hydraulique (5) comprend une des mesures dispositifs de réduction de section et/ou vannes et/ou étranglements du reflux.

6. Dispositif de mesure implanté sur un évaporateur pour réguler le niveau de remplissage conformément à une des revendications ci-dessus, **caractérisé en ce que** les dispositifs tubulaires hydrauliques (13, 14, 5) sont choisis parmi les piquages et les flexibles.

7. Dispositif de mesure implanté sur un évaporateur pour réguler le niveau de remplissage conformément à une des revendications ci-dessus, **caractérisé en ce que** le dispositif d'affichage et de régulation est équipé de sondes et/ou de capteurs.

8. Procédé de régulation du niveau de remplissage d'un mélange gaz/liquide dans un bac (1) au moyen d'un dispositif de mesure implanté sur un évaporateur conformément à la revendication 1, sachant que

■ un liquide est dirigé dans le bac (1) faisant office d'évaporateur, ce liquide est chauffé dans l'évaporateur via des dispositifs de chauffe (18) puis évacué de l'évaporateur sous forme de gaz,
■ un liquide est dirigé dans le bac (1), sachant que le liquide coule dans le tube de niveau (7) via un premier dispositif hydraulique (5) implanté à proximité du fond du bac (1) et conçu pour obturer le courant de retour (5) par rapport aux autres dispositifs hydrauliques prévus (13, 14) et que
■ si le niveau continue de monter dans le bac (1), le liquide est introduit par au moins un troisième autre dispositif hydraulique (14), implanté à hauteur de la consigne ou en-dessous de la consigne du niveau de remplissage du bac (1) et que le liquide dans le tube de niveau (7) est rempli au niveau réel et que
■ si l'amenée du liquide dans le bac (1) se poursuit, le niveau du liquide dans le tube de niveau (7) continu d'être rempli et que
■ le gaz s'échappant du liquide dans le tube de niveau (7) est dirigé via un second dispositif hydraulique (13) implanté au-dessus de la consigne du niveau de remplissage du bac (1) et que
■ si la consigne est atteinte, l'introduction du liquide dans le bac (1) est arrêtée au moyen d'un signal émis par le dispositif d'affichage et de régulation fermant la vanne d'arrivée du liquide (3) du bac (1) et que
■ si la consigne n'est pas atteinte, le dispositif d'affichage et de régulation émet un signal ouvrant la vanne d'arrivée du liquide (3) du bac (1).

9. Utilisation du dispositif de mesure implanté sur un évaporateur conformément à la revendication 1 **caractérisée en ce que** le dispositif de mesure est utilisé pour réguler le niveau de remplissage dans des évaporateurs à froid (23) avec des mélanges diphasés.

10. Utilisation du dispositif de mesure implantée sur un évaporateur conformément à la revendication 1 **caractérisée en ce que** le dispositif de mesure est utilisé pour réguler le niveau de remplissage dans des évaporateurs à froid d'installations d'ammoniaque.

Fig. 1

Fig. 2

Fig. 3

Fig. 3a

Fig. 3b

14

Fig. 4

EP 2 539 788 B1

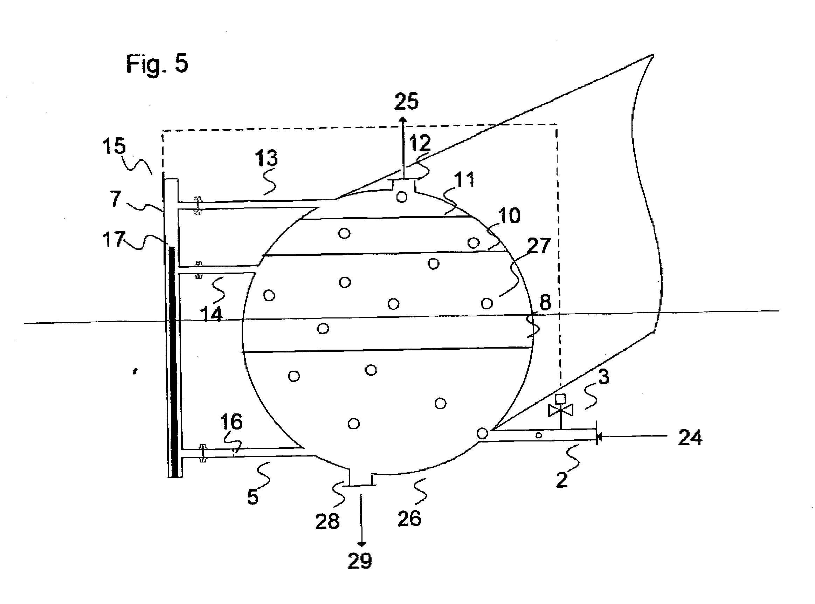

Fig. 5

EP 2 539 788 B1

**IN DER BESCHREIBUNG AUFGEFÜHRTE DOKUMENTE**

**In der Beschreibung aufgeführte Patentdokumente**

- EP 0330123 A2